# EUROPEAN PATENT APPLICATION

(11) **EP 3 117 980 A1**
(43) Date of publication of application: **18.01.2017**
(21) Application number: 16178168.7
(22) Date of filing: 06.07.2016
(51) Int. Cl.: B29C 65/16, F02M 25/08

(54) **RESIN MOLDED PRODUCT AND METHOD FOR MANUFACTURING THE SAME**

(30) Priority: 15.07.2015 JP 2015141590
(71) Applicant: HAMANAKODENSO CO., LTD., Kosai-city Shizuoka 431-0431 (JP)
(72) Inventor: KURITA, Chiaki, Kosai-city, Shizuoka-pref., 431-0431 (JP)
(74) Representative: Kuhnen & Wacker

(57) **Abstract**

A resin molded product is configured by bonding a first resin member (3) and a second resin member (2) by radiation of a laser light. The first resin member has a laser light permeability to be permeable to the laser light, and the second resin member has a laser light absorbing property to absorb the laser light. The resin molded product includes a protrusion portion (21) and a recess portion (22, 23, 32, 33). The protrusion portion is provided in the second resin member, the protrusion portion bonded to the first resin member by melting of the protrusion portion via the radiation of the laser light. The recess portion is provided in the first or second resin member so as to be located on both sides of the protrusion portion, the recess portion accommodating at least a part of the protrusion portion melted by the radiation of the laser light.

## Description

### TECHNICAL FIELD

The present disclosure relates to a resin molded product welded by radiation of a laser light and a method for manufacturing the resin molded product.

### BACKGROUND

Conventionally, a technology disclosed in Patent Document 1 (JP 2013-141823 A) is known as a resin molded product that is welded by radiation of a laser light. The resin molded product disclosed in Patent Document 1 includes a welded portion that is formed by radiating a laser light to an interface between a first resin member and a second resin member opposed to each other, and a flow limiting portion that is provided on both sides of the welded portion and limits a flow of a foam resin generated when a laser light is radiated.

One of the first and second resin members includes a protrusion portion protruding toward the other of the first and second resin members, and the other of the first and second resin members includes a recess portion into which the protrusion portion is inserted. The flow limiting portion is configured with a protrusion portion side wall including the protrusion portion, and a recess portion side wall contacting the protruding portion side wall and including the recess portion. When a laser light is radiated to the interface between the first resin member and the second resin member from the first resin member toward the second resin member, a radiated portion of the first resin member and the second resin member to which the laser light is radiated is melted, and accordingly the welded portion is formed. The foam resin melted and forming the welded portion flows from the radiated portion to the both sides. The foam resin flowing to the both sides flows into the interface between the flow limiting portion and is prevented from flowing farther.

The resin molded product of Patent Document 1 is welded by butt welding. However, when the protrusion portion provided in one of the first and second members and a flat surface of the other of the first and second members are positioned so as to be opposed to each other and bonded to each other by the radiation of the laser light, the protrusion portion melted may be solidified around the protrusion portion and become a burr. The burr may protrude from a surface of the resin member, drop from the surface. The burr may stay on the surface as an unexpected material and cause a trouble when the resin molded product is attached to another member.

### SUMMARY

It is an objective of the present disclosure to provide a resin molded product and a method for manufacturing the resin molded product capable of limiting a generation of a burr or the like when the resin molded product is welded by radiation of a laser light.

According to a first aspect of the present disclosure, a resin molded product is configured by bonding a first resin member and a second resin member by radiation of a laser light. The first resin member has a laser light permeability to be permeable to the laser light, and the second resin member has a laser light absorbing property to absorb the laser light. The resin molded product includes a protrusion portion and a recess portion. The protrusion portion is provided in the second resin member so as to protrude toward the first resin member, the protrusion portion bonded to the first resin member by melting of the protrusion portion via the radiation of the laser light in a state where the protrusion portion is in contact with the first resin member. The recess portion is provided in the first resin member or the second resin member so as to be located on both sides of the protrusion portion, the recess portion accommodating at least a part of the protrusion portion melted by the radiation of the laser light.

According to the first aspect, when the protrusion portion is welded by radiation of a laser light and flows to both sides of the protrusion portion, a melted resin can be accommodated in the recess portion provided in the first or second resin member so as to be positioned on the both sides of the protrusion portion. Accordingly, the protruding portion that flows to the both sides without adhering to the first resin member can be limited so as not to protrude from a surface of the second resin member as a burr. Moreover, since the melted resin flowing to the both sides is received by the recess portion, a state of the surface of the second resin member where the melted resin that does not contribute to bonding is unlikely to spread out broadly can be provided when the first resin member and the second resin member are bonded to each other. Accordingly, the resin molded product can be obtained, which is capable of avoiding a state where the melted resin that does not contribute to the adhesion of the first resin member and the second resin member protrudes extensively from the surface of the second resin member. According to this aspect, the resin molded product capable of limiting a generation of a burr or the like when the resin molded product is welded by radiation of a laser light can be provided.

A second aspect of the present disclosure is a method for manufacturing a resin molded product that is configured by bonding a first resin member and a second resin member by radiation of a laser light, the first resin member having a laser light permeability to be permeable to the laser light, the second resin member having a laser light absorbing property to absorb the laser light. The method includes: positioning the first resin member and the second resin member such that a protrusion portion of the second resin member protruding toward the first resin member becomes in contact with the first resin member; and bonding the first resin member and the second resin member by melting the protrusion portion via radiation of the laser light through the first resin member to a portion in which the first resin member and the protrusion portion contact with each other. One of the first resin member and the second resin member which contact with each other includes a recess portion located on both sides of the protrusion portion, and at least a part of the protrusion portion melted by the radiation of the laser light flows into and is accommodated in the recess portion in the bonding.

According to the second aspect, when the protrusion portion melted in the bonding process flows to the both sides of the protrusion portion, the melted resin can be accommodated in the recess portion provided in the first or second resin member. According to this, the resin molded product can be manufactured, in which the protruding portion that flows to the both sides without adhering to the first resin member can be limited so as not to protrude from a surface of the second resin member as a burr. Moreover, since the melted resin flowing to the both sides is received by the recess portion, the resin molded product can be manufactured, in which the melted resin is unlikely to spread out broadly when the first resin member and the second resin member are bonded to each other. According to this aspect, a method for manufacturing the resin molded product can be provided, in which a generation of a burr can be limited when the resin molded product is welded by radiation of a laser light.

A resin molded product may include: a first resin member having a laser light permeability to be permeable to the laser light; a second resin member having a laser light absorbing property to absorb the laser light; a bonded portion in which the first resin member and the second resin member is bonded to each other, the bonded portion is located at an interface between the first resin member and the second resin member; and a recess portion recessed from a surface of one of the first resin member and the second resin member, the recess portion being located on both sides of the bonded portion with respect to a direction parallel to the interface between the first resin member and the second resin member.

### BRIEF DESCRIPTION OF THE DRAWINGS

The disclosure, together with additional objectives, features and advantages thereof, will be best understood from the following description, the appended claims and the accompanying drawings, in which:
FIG. 1 is a sectional diagram illustrating a purge control valve using a resin molded product according to a first embodiment of the present disclosure;
FIG. 2 is a sectional diagram illustrating a first resin member and a second resin member according to a comparative example of the present disclosure;
FIG. 3 is a sectional diagram illustrating the first resin member and the second resin member according to the comparative example;
FIG. 4 is a sectional diagram illustrating a first resin member and a second resin member according to the first embodiment;
FIG. 5 is a sectional diagram illustrating the first resin member and the second resin member according to the first embodiment;
FIG. 6 is a sectional diagram illustrating the first resin member and the second resin member according to the first embodiment;
FIG. 7 is a sectional diagram illustrating a first resin member and a second resin member according to a second embodiment of the present disclosure; and
FIG. 8 is a sectional diagram illustrating the first resin member and the second resin member according to the second embodiment.

### DETAILED DESCRIPTION

Embodiments of the present disclosure will be described hereinafter referring to drawings. In the embodiments, a part that corresponds to a matter described in a preceding embodiment may be assigned with the same reference numeral, and redundant explanation for the part may be omitted. When only a part of a configuration is described in an embodiment, another preceding embodiment may be applied to the other parts of the configuration. The parts may be combined even if it is not explicitly described that the parts can be combined. The embodiments may be partially combined even if it is not explicitly described that the embodiments can be combined, provided there is no harm in the combination.

### (First Embodiment)

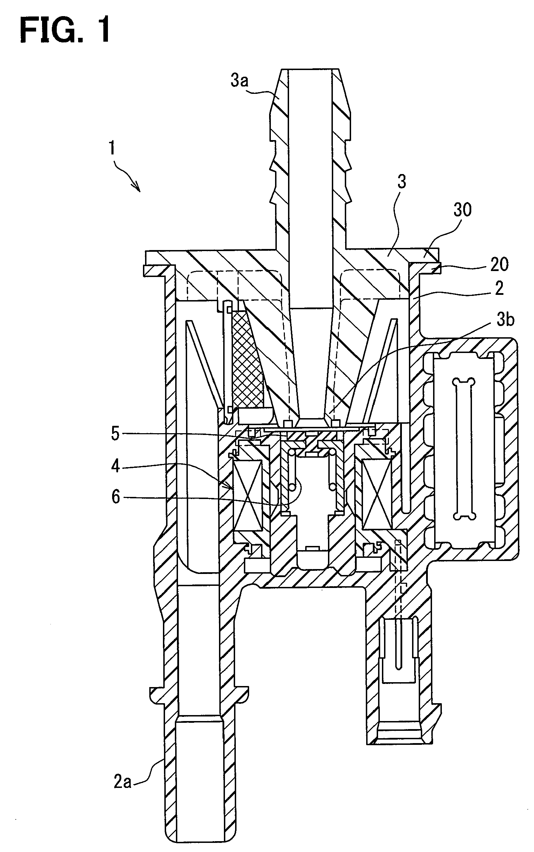

A resin molded product according to a first embodiment of the present disclosure will be described below referring to FIGS. 1 to 6. The resin molded product includes a first resin member, which has a laser light transmission property allowing a laser light to pass through, and a second resin member having a laser light absorbing property. The first resin member and the second resin member are bonded to each other by radiating a laser light. The resin molded product includes a bonded portion in which a resin is welded by radiation of a laser light. The resin molded product can be adopted to a housing of a purge control valve 1 used in a fuel evaporated gas purge system, for example.

The fuel evaporated gas purge system supplies a hydrocarbon gas or the like contained in a fuel adsorbed in a charcoal canister to an intake passage of an internal combustion engine. The fuel evaporated gas purge system limits a release of an evaporated fuel (fuel evaporated gas) from a fuel tank into an air. The fuel evaporated gas purge system includes an intake system of the internal combustion engine, which configures the intake air passage of the internal combustion engine, and an evaporated fuel purge system that supplies an evaporated fuel to the intake air system of the internal combustion engine.

The purge control valve 1 is a switching device that opens and closes a passage for supplying the evaporated fuel. The purge control valve 1 is capable of allowing the evaporated fuel supplied from the charcoal canister to pass and capable of preventing the evaporated fuel from passing. The purge control valve 1 is configured with a solenoid valve device including a valve body 5, a solenoid 4 and a spring 6, as shown in FIG. 1. The purge control valve 1 opens and closes the passage for supplying the evaporated fuel according to a balance between an electromagnetic force generated when the solenoid 4 is energized and an urging force of the spring 6.

When the solenoid 4 is not energized, the purge control valve 1 maintains a state where the passage for supplying the evaporated fuel is close. When the solenoid 4 is energized, the electromagnetic force of the solenoid 4 becomes larger than an elastic force (urging force) of the spring 6, and accordingly the passage for supplying the evaporated fuel is opened. A control device controls a duty ratio between an on-time and off-time of an energization of the solenoid 4 and energizes the solenoid 4. During the on-time, the solenoid 4 is energized. On the other hand, during the off-time, the solenoid 4 is not energized. The purge control valve 1 is also referred to as a duty control valve. According to this control of energization, an amount of the evaporated fuel flowing in the passage for supplying the evaporated fuel can be controlled.

The purge control valve 1 includes a housing defining a passage in which a fluid that is the evaporated fuel flows. The housing includes an inflow side housing portion 2 and an outflow side housing portion 3. The inflow side housing portion 2 includes an inflow port 2a and houses a valve body 5, a solenoid 4 and a spring 6, for example. The outflow side housing portion 3 defines a valve opening 3b and includes an outflow port 3a.

The outflow side housing portion 3 includes a flange portion 30 that covers an upper opening of the inflow side housing portion 2 opposite from the inflow port 2a. The outflow side housing portion 3 includes the outflow port 3a and the valve opening 3b. The outflow port 3a is a cylindrical portion protruding on one side of the flange portion 30, and the valve opening 3b is provided on an end of a cylindrical portion protruding the other side of the flange portion 30. The flange portion 30 is integrally connected to a flange portion 20 radially protruding from whole circumferences of the upper opening of the inflow side housing portion 2. The flange portion 30 overlaps the flange portion 20. The flange portions 20, 30 are bonded by melting the resin via radiating a laser light. Since the flange portion 20 and the flange portion 30 are integrally connected, the inflow side housing portion 2 and the outflow side housing portion 3 can be joined so that the fluid flowing in the housing does not leak to an outside.

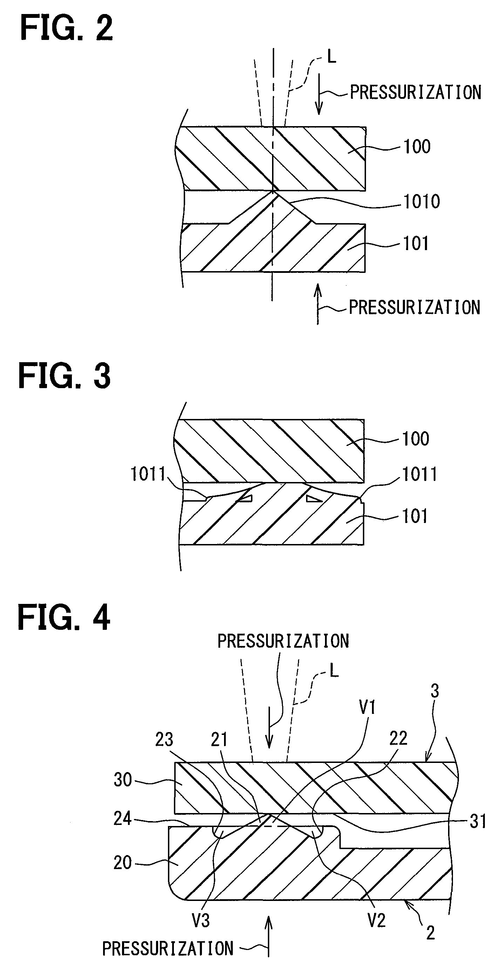

A method shown in FIGS. 2 and 3 is known, in which the inflow side housing portion 2 and the outflow side housing portion 3 are bonded by radiation of a laser light. The method will be described below. FIGS. 2 and 3 are cross-sectional diagrams illustrating a first resin member 100 and a second resin member 101 according to a comparative example of the present disclosure. In FIG. 2, a surface of the first resin member 100 and a protrusion portion 1010 of the second resin member 101 are opposed to each other. FIG. 3 shows a state of the first resin member 100 and the second resin member 101 according to the comparative example after those are bonded by radiating a laser light.

The first resin member 100 has a laser light transmission property, and the second resin member 101 has a laser light absorbing property and includes the protrusion portion 1010. As shown in FIG. 2, a laser light L is radiated to the first resin member 100 and the second resin member 101 which are pressurized in a state where the protrusion portion 1010 is in contact with a contact target surface of the first resin member 100. A radiated portion of a first resin member 100 to which the laser light is radiated is set to a position where the laser light L transmits through the first resin member 100 and is absorbed to the protrusion portion 1010. The radiated portion is a surface of the first resin member 100 opposite from a portion where the protrusion portion 1010 contacts.

When the laser light is radiated to the radiated portion as indicated by a dashed line of FIG. 2, the laser light that has transmitted through the first resin member 100 reaches the protrusion portion 1010 and is absorbed by the protrusion portion 1010. The protrusion portion 1010 absorbing the laser light melts under pressurization. As shown in FIG. 3, a part of the resin of the protrusion portion 1010 is spread out to both sides of the radiated portion, and the protrusion portion 1010 melted is bonded to the first resin member 100. In this case, since a part of the protrusion portion 1010 melted flows around or to the both sides of the radiated portion and is solidified, a protrusion and a burr 1011 may occur.

The burr 1011 may become a protrusion portion protruding from a surface of the second resin member 101 and may be an obstacle in an assembling. If a part of the burr 1011 is chipped, the fraction may drop from the surface of the second resin member 101. If the burr 1011 dropping from the second resin member 101 enters a passage, in which the fluid flows, or a sliding portion, it may cause an actuation trouble of a machine. Moreover, if the burr 1011 is formed in a portion where may be touched by a person, the touch of the person may cause a trouble.

In the first embodiment, in order to avoid such troubles, the first resin member, the second resin member and a welding method shown in FIGS. 4 to 6 are adopted. The outflow side housing portion 3 is a first resin member made of a material having a laser light transmission property, for example. The inflow side housing portion 2 is a second resin member made of a material having a laser light absorbing property, for example. The outflow side housing portion 3 can be formed of a material having a transparency higher than the inflow side housing portion 2 or having a light color. The first and second resin members may be formed of resin materials such as polystyrene, polycarbonate and polybutylene terephthalate.

The inflow side housing portion 2 includes a protrusion portion 21 protruding from a surface thereof toward the outflow side housing portion 3. The protrusion portion 21 is melted by radiation of a laser light in a state where the protrusion portion 21 is opposed to the outflow side housing portion 3, and accordingly the protrusion portion 21 is bonded to the outflow side housing portion 3. The inflow side housing portion 2 includes recess portions 22 and 23 positioned on both sides of the protrusion portion 21. The recess portion 22 and the recess portion 23 are provided on the both sides of the protrusion portion 21 so that the protrusion portion 21 is positioned between the recess portion 22 and the recess portion 23 in a cross-section of the inflow side housing portion 2 parallel to a pressurization direction or a direction in which the outflow side housing portion 3 and the inflow side housing portion 2 are opposed to each other. Therefore, at least a part of the protrusion portion 21 melted by the radiation of the laser light flows into the recess portion 22 and the recess portion 23 to be accommodated. The recess portions 22, 23 may be located on both sides of the protrusion portion 21 with respect to a direction intersecting with a direction in which the protrusion portion 21 protrudes.

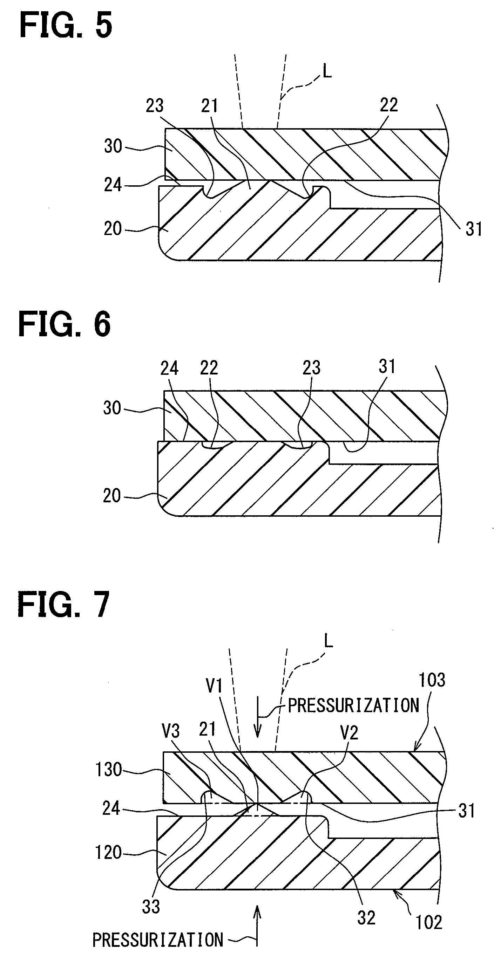

As shown in FIG. 4, the protrusion portion 21 provided on the second resin member having a laser light absorbing property protrudes toward the first resin member so as to be close to the first resin member compared to a contact target surface 24 of the second resin member that is to contact a contact target surface 31 of the first resin member. In other words, the protrusion portion 21 provided on the flange portion 20 having a laser light absorbing property protrudes toward the flange portion 30 so as to be close to the flange portion 30 compared to a contact target surface 24 of the flange portion 20 that is to contact the contact target surface 31 of the flange portion 30. According to this configuration, in a state where the outflow side housing portion 3 and the inflow side housing portion 2 are bonded as shown in FIG. 6, the contact target surface 24 of the flange portion 20 and the contact target surface 31 of the flange portion 30 contact to each other. Whole contact target surface 24 and whole contact target surface 31 may contact to each other.

When the protrusion portion 21 has not melted, a volume V1 of a portion of the protrusion portion 21 protruding from the contact target surface 24 of the flange portion 20 is set to be smaller than a capacity of the recess portion 22 and the recess portion 23. The capacity of the recess portion 22 and the recess portion 23 is a part surrounded by a dot-and-dash line illustrated in FIG. 4 and the recess portions 22, 23, and is a sum of a volume V2 of the recess portion 22 and a volume V3 of the recess portion 23. The volume V2 of the recess portion 22 and the volume V3 of the recess portion 23 are the same size. The recess portion 22 may be spaced from the protrusion portion 21 by a same distance as a distance by which the recess portion 23 is spaced from the protrusion portion 21. According to this configuration, at least a part of the protrusion portion 21 melted can be limited not to unevenly flow into the recess portion 22 and the recess portion 23. Accordingly, a generation of a burr can be limited. The burr may be generated when the resin of the protrusion portion melted cannot be accommodated in the recess portions 22, 23 and is solidified in a state where the resin protrudes from the surface.

As shown in FIG. 4, a curved surface is formed at least in a corner portion of bottom surfaces of the recess portions 22, 23 before a bonding process. Accordingly, the curved surface, not an angle, is provided in the corner portion of the bottom portions of the recess portions 22, 23. The bottom surfaces of the recess portions 22, 23 are provided as the curved surface or a combination of the curved surface and a flat surface. Moreover, the corner portions of the bottom surfaces of the recess portions 22, 23 may be provided as round surfaces having a specific size.

Nest, a method for manufacturing the resin molded product manufactured by a bonding the first resin member and the second resin member via radiating a laser light. The method for manufacturing the resin molded product includes a positioning process in which the first resin member and the second resin member are positioned to be opposed to each other and a bonding process in which the first resin member and the second resin member are bonded to each other. In a positioning process, as shown in FIG. 4, the protrusion portion 21 provided in the inflow side housing portion 2 that is the second resin member and the contact target surface 31 of the outflow side housing portion 3 are set to be opposed to each other with a predetermined relationship. In the bonding process, as shown in FIGS. 5 and 6, the protrusion portion 21 and the outflow side housing portion 3 are bonded to each other by radiating a laser light to the outflow side housing portion 3 to melt the protrusion portion 21.

Subsequently, in the bonding process, the flange portion 30 and the flange portion 20 are pressurized (pressed) in a state where the flange portion 30 of the outflow side housing portion 3 and the flange portion 20 of the inflow side housing portion 2 contact to each other only at a protrusion portion 21 and the contact target surface 31. In this situation, the contact target surface 24 of the flange portion 20 and the contact target surface 31 of the flange portion 30 are separated from each other. Moreover, in the bonding process, a laser light L is radiated perpendicularly to a portion of the outflow side housing portion 3 located on a surface opposite from a portion of the outflow side housing portion 3 contacting the protrusion portion 21 under a situation the flange portions 20, 30 are pressurized, as shown in FIG. 4.

When the laser light L transmits through the flange portion 30 and reaches the protrusion portion 21, the laser light L is absorbed by the protrusion portion 21 and melts (softens) the protrusion portion 21. In this time, since the flange portions 20, 30 are pressurized, the bonding of the protrusion portion 21 and the contact target surface 31 proceeds with shortening a distance between the contact target surface 24 and the contact target surface 31. Since the protrusion portion 21 is softened and melted, an edge of the protrusion portion 21 moves toward both sides of the protrusion portion 21, and accordingly the resin that has moved flows into the recess portions 22, 23 and is accommodated in the recess portions 22, 23, as shown in FIG. 5.

When the bonding further proceeds, the melted resin of the protrusion portion 21 further moves toward both sides and flows into the recess portions 22, 23, and the contact target surfaces 24, 31 further approaches each other so as to contact with each other. When whole contact target surfaces 24, 31 are contact with each other, the radiation of the laser light L is stopped, the protrusion portion 21 that has melted is solidified so as to be bonded to the contact target surface 31, and the bonding process is finished (refer to FIG. 6). Since the recess portions 22, 23 shown in FIG. 6 after the bonding process accommodates the resin that has been the protrusion portion 21, depths of the recess portions 22, 23 from the contact target surface 24 are shallower than depths of the recess portions 22, 23 shown in FIG. 4 before the bonding process.

Next, effects of the resin molded product according to the first embodiment will be described below. The resin molded product is formed by bonding the outflow side housing portion 3 having a laser light transmission property and inflow side housing portion 2 having a laser light absorbing property via radiating a laser light. The resin molded product includes a protrusion portion 21 provided in the inflow side housing portion 2 so as to protrude toward the outflow side housing portion 3, and the recess portions 22, 23 located on the both sides of the protrusion portion 21. The protrusion portion 21 is bonded to the outflow side housing portion 3 by radiation of a laser light to melt the protrusion portion 21 in a state where the inflow side housing portion 2 and the outflow side housing portion 3 are opposed to each other. The recess portions 22, 23 configures pockets that accommodates at least a part of the protrusion portion 21 melted by the radiation of a laser light.

According to this configuration, when the protrusion portion 21 is melted by the radiation of a laser light and flows to the both sides of the protrusion portion 21, the melted resin of the protrusion portion 21 can be accommodated in the recess portions 22, 23 positioned on the both sides of the protrusion portion 21 of the inflow side housing portion 2. Accordingly, the resin which is a part of the protrusion portion 21 and flows to the both sides without adhering the outflow side housing portion 3 can be limited not to protrude from the surface of the inflow side housing portion 2 as a burr. Moreover, since the resin that is melted and flows to the both sides is received by the recess portions 22, 23, a state of the surface of the inflow side housing portion 2 where the melted resin that does not contribute to the bonding is unlikely to spread out broadly can be provided when the inflow side housing portion 2 and the outflow side housing portion 3 are bonded to each other. Therefore, the resin molded product can be obtained, which can avoid a state where the resin that does not contribute to bonding of the outflow side housing portion 3 and the inflow side housing portion 2 protrudes extensively from the surface of the inflow side housing portion 2. According to the resin molded product of the first embodiment, a generation of a burr can be limited when the resin molded product is welded by the radiation of a laser light.

The recess portions 22, 23 are provided in the second resin member, not the first resin member, having a laser light absorbing property. According to this, since the protrusion portion 21 and the recess portions 22, 23 are provided on the second resin member, positions of the recess portions 22, 23 relative to the protrusion portion 21 is not changed even when a position where the first resin member and the second resin member faces to each other is changed from a predetermined position. Therefore, even when an accuracy of positioning the first resin member and the second resin member opposed to each other is low, a part of the resin of the protrusion portion 21 melted can be limited not to flow into one of recess portions 22, 23 unevenly. Accordingly, a generation of a burr can be limited, which is generated when the melted resin unevenly flows into one of the recess portions 22, 23 and is solidified in a state where the melted resin that cannot be accommodated in the recess portions 22, 23 protrudes from the surface of the second resin member.

Moreover, the first resin member and the second resin member are the inflow side housing portion 2 and the outflow side housing portion 3 that configures the purge control valve 1 capable of opening and closing the passage for supplying the evaporated fuel from the canister to the internal combustion engine. The inflow side housing portion 2 includes the inflow port 2a through which the evaporated fuel flows into the housing and houses the valve body 5 and the solenoid 4. The outflow side housing portion 3 includes the outflow port 3a of the evaporated fuel. According to this, a dropping of a burr and an entrance of the burr into the fluid passage can be limited, and an actuation trouble of the purge control valve 1 can be limited. Moreover, since a generation of a burr in a portion where may be touched by a hand of a person, a trouble which may happen during assembly of the purge control valve 1 can be prevented.

The method for manufacturing the resin molded product includes the positioning process and the bonding process. In the positioning process, the protrusion portion 21 that is provided on the second resin member so as to protrude toward the first resin member and the first resin member are opposed to each other. In the bonding process, the first resin member and the second resin member are bonded to each other. In the bonding process, the protrusion portion 21 is melted by radiating a laser light to the first and second resin members which are positioned so as to opposed to each other. The laser light is radiated from a side of the first resin member opposite from the protrusion portion 21. The second resin member includes recess portions 22, 23 positioned on both sides of the protrusion portion 21. In the bonding process, at least a part of the protrusion portion 21 melted by the radiation of a laser light flows into the recess portions 22, 23 to be accommodated.

According to this manufacturing method, when the protrusion portion 21 melted in the bonding process flows to the both sides of the protrusion portion 21, the melted resin can be accommodated in the recess portions 22, 23 provided in the second resin member. Therefore, the resin molded product can be manufactured, in which the melted resin flowing to the both sides of the protrusion portion 21 without adhering to the first resin member is prevented from protruding from a surface of the second resin member as a burr. Moreover, since the recess portions 22, 23 receive the melted resin flowing to the both sides of the protrusion portion 21, the resin molded product can be manufactured, in which a resin that does not contribute to bond the first resin member and the second resin member is unlikely to broadly spread out when the first resin member and the second resin member are bonded. According to the manufacturing method of the first embodiment, a resin molded product can be manufactured, in which a burr generated when the first resin member and the second resin member are welded by radiating a laser light can be reduced.

The volume V1 of the protrusion portion 21 before melted by radiation of a laser light is set to be smaller than a capacity of the recess portions 22, 23. The capacity of the recess portions 22, 23 is the same volume as sum of the volume V2 and the volume V3. According to this configuration, even when whole protrusion portion 21 is melted, and when whole contact target surface 24 of flange portion 20 and whole contact target surface 31 of the flange portion 30 contact with each other as shown in FIG. 6, the melted resin can be prevented from overflowing from the recess portions 22, 23. Therefore, even when whole protrusion portion 21 is melted, the recess portions 22, 23 can function as a recovery portion receiving the melted resin so as not to generate a burr. Accordingly, a dropping of a burr that is generated when the resin is melted and an entrance of the burr that chips can be prevented effectively. An actuation trouble of a machine because of a dropping can be limited effectively. A person can be prevented from touching a burr effectively.

Moreover, the curved surface is formed at least in the portion corresponding to the corner portion of the bottom surface of the recess portions 22, 23 before the protrusion portion 21 is melted by the radiation of a laser light. According to this configuration, the bottom portions of the recess portions 22, 23 are configured with the curved surface or a combination of a flat surface and the curved surface, and especially the corner portion of the bottom portion is configured with the curved surface, not an angle, before the protrusion portion 21 is melted. This configuration is capable of contributing to limiting a frictional wear of a die for manufacturing the second resin member and the first resin member including the recess portions 22, 23.

### (Second Embodiment)

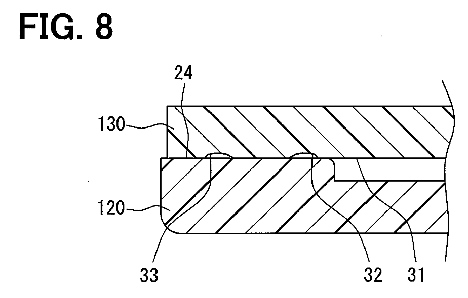

A resin molded product and a method for manufacturing the resin molded product according to a second embodiment will be described below referring to FIGS. 7 and 8. In drawings, a part including the same configuration as the first embodiment is assigned with the same reference numeral, and the part has the same effects. A configuration and an effect which are not described in the second embodiment is the same as the first embodiment, and redundant explanation may be omitted. A part having the same configuration as the first embodiment exerts the same effects as the first embodiment.

As shown in FIG. 7, a recess portion 32 and a recess portion 33 located on both sides of a protrusion portion 21 are provided in an outflow side housing portion 103 that is a first resin member.

As shown in FIG. 7, the protrusion portion 21 provided in the second resin member protrudes from a contact target surface 24 of a second resin member that is to contact a contact target surface 31 of the first resin member toward the first resin member. In other words, the protrusion portion 21 protrudes from the contact target surface 24 of a flange portion 120 that is to contact the contact target surface 31 of a flange portion 130 toward the flange portion 130. According to this configuration, when an outflow side housing portion 103 and an inflow side housing portion 102 are bonded as shown in FIG. 8, whole contact target surface 24 of the flange portion 120 and whole contact target surface 31 of the flange portion 130 contact with each other.

As shown in FIG. 7, a part of the protrusion portion 21 protruding from the contact target surface of the flange portion 120 has a volume V1 smaller than a capacity the recess portions 32, 33 before the protrusion portion 21 is melted. The capacity of the recess portions 32, 33 is a volume of a part that is enclosed by a dot-and-dash line of FIG. 7 and recess portions 32, 33. The capacity of the recess portions 32, 33 is sum of a volume V2 of the recess portion 32 and a volume V3 of the recess portion 33 recessed from the contact target surface 31 of the flange portion 130. The volume V2 of the recess portion 32 and the volume V3 of the recess portion 33 are the same size, and the recess portion 32 and the recess portion 33 may be spaced by the same distance from the protrusion portion 21. According to this configuration, at least a part of the protrusion portion 21 melted can be prevented from flowing unevenly into one of the recess portions 32, 33 positioned on both sides of the protrusion portion 21. Accordingly, a generation of a burr, which is generated when the melted resin cannot be accommodated in the recess portions 32, 33 and is solidified in a state where the melted resin protrudes from a surface of the contact target surface 31, can be limited.

As shown in FIG. 7, a curved surface is formed at least in a corner portion of the bottom surface of the recess portions 32, 33 before a bonding process. According to this, the curved surface, not an angle, is provided in the corner portion of the recess portions 32, 33 before the bonding process, and the bottom surfaces of the recess portions 32, 33 are configured with a curved surface or a combination of the curved surface and a flat surface. Moreover, the corner portion of the bottom surface of the recess portions 32, 33 can be configured with a round surface.

A method for manufacturing the resin molded product according to the second embodiment includes a positioning process of the first resin member and the second resin member, and a bonding process in which the first resin member and the second resin member are bonded by radiating a laser light. In the positioning process, as shown in FIG. 7, the protrusion portion 21 provided in the inflow side housing portion 102 and the contact target surface 31 of the outflow side housing portion 103 are positioned so as to be opposed to each other with a predetermined relationship. In the bonding process, a laser light is radiated to the outflow side housing portion 103 to melt the protrusion portion 21, and the protrusion portion 21 and the outflow side housing portion 103 are bonded to each other.

In the bonding process, a flange portion 130 and a flange portion 120 are pressurized so as to be pressed in a state where the flange portion 130 of the outflow side housing portion 103 and the flange portion 120 of the inflow side housing portion 102 contact with each other only at the protrusion portion 21 and the contact target surface 31. In this situation, the contact target surface 24 of the flange portion 120 and the contact target surface 31 of the flange portion 130 are separated from each other. In the bonding process, under the pressurization, a laser light L is radiated to a portion of a surface of the outflow side housing portion 103 opposite from a portion contacting the protrusion portion 21 as shown in FIG. 7.

The laser light L transmitting in the flange portion 130 reaches the protrusion portion 21 and is absorbed to the protrusion portion 21, and accordingly the protrusion portion 21 is softened and melted. At this time, along with the softening and melting the protrusion portion 21, the bonding of the protrusion portion 21 and the contact target surface 31 is proceeding with shortening a distance between the contact target surface 24 and the contact target surface 31. Because of the softening and melting of the protrusion portion 21, an front edge of the protrusion portion 21 moves toward both sides of the protrusion portion 21, and accordingly the melted resin flows into the recess portions 32, 33 to be accommodated in the recess portions 32, 33.

When the bonding further proceeds, the resin of the protrusion portion 21 further moves to the both sides of the protrusion portion 21 and further flows into the recess portions 32, 33. At the same time, the contact target surface 24 and the contact target surface 31 further approaches to each other, and subsequently whole contact target surface 24 and whole contact target surface 31 come in contact with each other. After whole contact target surface 24 and whole contact target surface 31 contact with each other, the radiation of the laser light is stopped. After the protrusion portion 21 in a melted state is solidified, the protrusion portion 21 and the contact target surface 31 are bonded, and the bonding process is ended. Since the recess portions 32, 33, which are shown in FIG. 8, after the bonding process accommodate the resin that has configured the protrusion portion 21, a depth of the recess portions 32, 33 from the contact target surface 31 is shallower than before the bonding process, as shown in FIGS. 7 and 8.

Next, effects of the resin molded product according to the second embodiment will be described below. The resin molded product includes the protrusion portion 21 provided in the inflow side housing portion 102 so as to protrude toward the outflow side housing portion 103, and the recess portions 32, 33 provided in the outflow side housing portion 103 so as to be positioned on the both sides of the protrusion portion 21. The recess portions 32, 33 provided in the outflow side housing portion 103 configures a pocket accommodating at least a part of the protrusion portion 21 melted by the radiation of a laser light.

According to this configuration, when the protrusion portion 21 is melted by the radiation of a laser light and flows to the both sides of the protrusion portion 21, the melted resin can be accommodated in the recess portions 32, 33 provided in the outflow side housing portion 103 so as to be positioned on the both sides of the protrusion portion 21. According to this, the protrusion portion 21 that flows to the both sides without adhering to the outflow side housing portion 103 can be limited so as not to protrude from the surface of the inflow side housing portion 102 as a burr. Moreover, since the melted resin flowing to the both sides of the protrusion portion 21 is received by the recess portions 32, 33, a state of a surface of the inflow side housing portion where the melted resin that does not contribute to bonding of the outflow side housing portion 103 and the inflow side housing portion 102 does not spread out broadly can be provided. Accordingly, the resin molded product can be obtained, which can avoid a state where the melted resin that does not contribute to bonding the outflow side housing portion 103 and the inflow side housing portion 102 protrudes extensively from a surface of the inflow side housing portion 102. According to the resin molded product of the second embodiment, a generation of a burr, for example, can be limited when the resin molded product is welded by the radiation of a laser light.

Moreover, in the method for manufacturing the resin molded product according to the second embodiment, the recess portions 32, 33 are provided in the first resin member so as to be positioned on the both sides of the protrusion portion 21. In the bonding process, at least a part of the protrusion portion 21 melted by the radiation of a laser light flows into the recess portions 32, 33 and is accommodated in the recess portions 32, 33.

According to this manufacturing method, when the protrusion portion 21 is melted and flows to the both sides of the protrusion portion 21 in the bonding process, the melted resin can be accommodated in the recess portions 32, 33 provided in the first resin member. Accordingly, the protrusion portion 21 that flows to the both sides without adhering to the first resin member can be limited so as not to protrude from the surface of the second resin member as a burr. Moreover, since the melted resin flowing to the both sides is received by the recess portions 32, 33, the resin molded member can be manufactured, in which the melted resin that does not contribute to adhering is unlikely to spread out broadly. According to the manufacturing method of the second embodiment, the resin molded product can be manufactured, which is capable of limiting a generation of a burr when the resin molded product is welded by the radiation of a laser light.

Although the present disclosure has been fully described in connection with the preferred embodiments thereof with reference to the accompanying drawings, it is to be noted that various changes and modifications will become apparent to those skilled in the art.

Above-described configurations are just examples, and the scope of the present disclosure is not limited to these.

In the above-described embodiments, the outflow side housing portion 3 is the first resin member having a laser light transmission property, and the inflow side housing portion 2 is the second resin member having a laser light absorbing property. However, the present disclosure is not limited to these embodiments. For example, the inflow side housing portion 2 may be the first resin member having a laser light transmission property, and the outflow side housing portion 3 may be the second resin member having a laser light absorbing property.

In this case, the protrusion portion 21 protrudes from the surface of the outflow side housing portion 3 toward the inflow side housing portion 2. The laser light L is radiated to the inflow side housing portion 2 with pressurizing the inflow side housing portion 2 and the outflow side housing portion 3 under a situation where the protrusion portion 21 contacts the contact target surface of the inflow side housing portion 2. A portion where the laser light L is radiated is set so that the radiated laser light L transmits through the inflow side housing portion 2 to be absorbed by the protrusion portion 21. The portion where the laser light L is radiated is a surface of the inflow side housing portion 2 opposite from the portion where the protrusion portion contacts.

The protrusion portion 21 described above and melted by radiating a laser light has a tapered shape having a sharp end. However, the shape of the protrusion portion 21 is not limited to this. For example, a shape of a longitudinal section of the protrusion portion 21 may be a trapezoidal shape, a rectangular shape, or a semicircular shape. A shape of a longitudinal section of an edge portion of the protrusion portion 21 may be a curved shape.

The resin molded product may include a bonded portion in which the first resin member 3 and the second resin member 2 is bonded to each other, the bonded portion is located at an interface between the first resin member 3 and the second resin member 2. The resin molded product may include the recess portion 22, 23, 32, 33 recessed from a surface of one of the first resin member 3 and the second resin member 2, the recess portion being located on both sides of the bonded portion with respect to a direction parallel to the interface between the first resin member 2 and the second resin member 3. An edge of the recess portion 22, 23, 32, 33 may directly contact the bonded portion. The recess portion 22, 23, 32, 33 may be a groove continuously surrounding the bonded portion to have an annular shape. The recess portion 32, 33 may be provided on the surface of the first resin member 3 and accommodate a part of the second resin member 2.

Additional advantages and modifications will readily occur to those skilled in the art. The disclosure in its broader terms is therefore not limited to the specific details, representative apparatus, and illustrative examples shown and described.

## Claims

1. A resin molded product that is configured by bonding a first resin member (3) and a second resin member (2) by radiation of a laser light, the first resin member (3) having a laser light permeability to be permeable to the laser light, the second resin member (2) having a laser light absorbing property to absorb the laser light, the resin molded product comprising:
a protrusion portion (21) provided in the second resin member (2) so as to protrude toward the first resin member (3), the protrusion portion (21) bonded to the first resin member (3) by melting of the protrusion portion (21) via the radiation of the laser light in a state where the protrusion portion (21) is in contact with the first resin member (3); and
a recess portion (22, 23, 32, 33) provided in the first resin member (3) or the second resin member (2) so as to be located on both sides of the protrusion portion (21), the recess portion (22, 23,32,33) accommodating at least a part of the protrusion portion (21) melted by the radiation of the laser light.

2. The resin molded product according to claim 1, wherein the recess portion (22, 23) is provided not in the first resin member (3) but in the second resin member (2).

3. The resin molded product according to claim 1 or 2, wherein
the second resin member (2) is an inflow side housing portion (2), which includes an inflow port (2a) receiving a supply of an evaporated fuel and houses a valve body (5) and a solenoid (4), and
the first resin member (3) is an outflow side housing portion (3) including an outflow port (3a) of the evaporated fuel.

4. The resin molded product according to claim 1 or 2, wherein
the first resin member (3) is an inflow side housing portion (2), which includes an inflow port (2a) receiving a supply of an evaporated fuel and houses a valve body (5) and a solenoid (4), and
the second resin member (2) is an outflow side housing portion (3) including an outflow port (3a) of the evaporated fuel.

5. A method for manufacturing a resin molded product that is configured by bonding a first resin member (3) and a second resin member (2) by radiation of a laser light, the first resin member (3) having a laser light permeability to be permeable to the laser light, the second resin member (2) having a laser light absorbing property to absorb the laser light, the method comprising:
positioning the first resin member (3) and the second resin member (2) such that a protrusion portion (21) of the second resin member (2) protruding toward the first resin member (3) becomes in contact with the first resin member (3); and
bonding the first resin member (3) and the second resin member (2) by melting the protrusion portion (21) via radiation of the laser light through the first resin member to a portion in which the first resin member (3) and the protrusion portion (21) contact with each other, wherein
one of the first resin member (3) and the second resin member (2) which contact with each other includes a recess portion (22, 23, 32, 33) located on both sides of the protrusion portion (21), and
at least a part of the protrusion portion (21) melted by the radiation of the laser light flows into and is accommodated in the recess portion (22, 23, 32, 33) in the bonding.

6. The method for manufacturing the resin molded product, according to claim 5, wherein a volume of the protrusion portion (21) is smaller than a capacity of the recess portion (22, 23, 32, 33) before the protrusion portion is melted by the radiation of the laser light.

7. The method for manufacturing the resin molded product according to claim 5 or 6, wherein a curved surface is formed at least in a portion corresponding to a corner portion of a bottom surface of the recess portion (22, 23, 32, 33) before the protrusion portion (21) is melted by the radiation of the laser light.
